# FASCICULE DE BREVET EUROPEEN

(11) **EP 3 072 812 B1**
(45) Date de publication et mention de la délivrance du brevet: **14.06.2017**
(21) Numéro de dépôt: 16158002.2
(22) Date de dépôt: 01.03.2016
(51) Int. Cl.: B64C 27/00, B64D 45/08, B64D 47/04, B64D 47/06

(54) **PROCEDE ET DISPOSITIF POUR SIGNALER AU SOL UN AERONEF EN VOL, ET AERONEF MUNI DE CE DISPOSITIF**
VERFAHREN UND VORRICHTUNG ZUR SIGNALISIERUNG EINES LUFTFAHRZEUGS IM FLUG AN BODENEINRICHTUNGEN, UND MIT EINER SOLCHEN VORRICHTUNG AUSGESTATTETES LUFTFAHRZEUG
A METHOD AND A DEVICE FOR MARKING THE GROUND FOR AN AIRCRAFT IN FLIGHT, AND AN AIRCRAFT INCLUDING THE DEVICE

(30) Priorité: 27.03.2015 FR 1500620
(43) Date de publication de la demande: 28.09.2016
(73) Titulaire: Airbus Helicopters, 13725 Marignane Cedex (FR)
(72) Inventeur: MOUTON, Christophe, 13150 TARASCON (FR); ROUTIN, Hervé, 13100 AIX EN PROVENCE (FR)
(74) Mandataire: GPI & Associés

(56) Documents cités:
- EP-A1- 2 433 869
- US-A- 4 916 445
- US-A1- 2003 058 653
- US-A1- 2010 302 072

## Description

La présente invention concerne un procédé et un dispositif pour signaler au sol un aéronef en vol, et un aéronef muni de ce dispositif.

En particulier, l'invention se situe dans le domaine technique des phares signalant qu'un aéronef approche d'une aire d'atterrissage, notamment de nuit.

Un aéronef peut être autorisé à voler de nuit, et donc à atterrir de nuit sur une aire d'atterrissage.

L'aire d'atterrissage peut être préparée afin d'être parfaitement éclairée et délimitée. Des individus situés au sol évitent donc soigneusement cette aire d'atterrissage pour ne pas être impactés par un aéronef qui se pose sur cette aire d'atterrissage.

Néanmoins, un aéronef peut être amené à se poser sur une aire d'atterrissage peu ou pas éclairée. En particulier, un aéronef à atterrissage court tel qu'un giravion peut se poser sur de multiples aires, et pas nécessairement sur une piste d'un aérodrome parfaitement équipée de moyens d'éclairage notamment.

Un aéronef à voilure tournante peut en particulier se poser en campagne pour porter assistance à des individus, suite à un accident par exemple.

Par suite, poser un aéronef sur une aire non préparée peut s'avérer délicat, voire dangereux pour l'aéronef et les individus évoluant au sol.

Un aéronef comporte alors usuellement des phares d'atterrissage permettant d'éclairer l'aire d'atterrissage visée. Les phares d'atterrissage tendent notamment à permettre l'identification d'éventuels dangers au sol pour l'aéronef, tels que des obstacles naturels ou non naturels.

Un phare d'atterrissage peut émettre un faisceau lumineux à l'aide d'une lampe halogène, ou d'une lampe non directive à décharge luminescente haute pression connue sous l'acronyme HID. Des miroirs paraboliques et des moteurs sont éventuellement utilisés pour collimater le faisceau lumineux dans une direction donnée.

Un phare d'atterrissage peut aussi comprendre une lampe à diode électroluminescente connue sous l'acronyme LED pour émettre un faisceau lumineux. Un système optique connu sous l'expression anglaise « TIR Lens » peut être utilisé pour modeler un tel faisceau lumineux.

Un phare d'atterrissage est donc limité à la projection un faisceau lumineux pour que le pilote puisse voir dans l'obscurité. Ce faisceau lumineux couvre au sol la totalité d'une surface ronde ou ovale. La lumière émise à la périphérie du faisceau peut être sensiblement diffuse en formant un halo lumineux.

Par ailleurs, les phares d'atterrissage permettent aussi d'éclairer une zone d'atterrissage pour signaler cette zone d'atterrissage à des individus situés au sol. Ces individus évitent alors la zone éclairée pour ne pas être impactés par un aéronef en cours d'atterrissage.

Toutefois, dans un secteur présentant une forte luminosité ambiante, un individu peut éprouver des difficultés pour identifier formellement la zone éclairée par l'aéronef.

Par exemple, sur des zones d'atterrissages particulières où de nombreux véhicules sont présents, les phares de ces véhicules peuvent gêner l'identification de la zone éclairée par un aéronef. A titre illustratif, de nombreux véhicules peuvent intervenir dans un secteur donné lors d'une mission de secours. Dès lors, l'indentification de la zone éclairée par un aéronef en phase d'atterrissage peut s'avérer difficile.

Les hélicoptères actuels sont alors essentiellement repérés par le bruit émis par ces hélicoptères. L'éclairage fourni par un phare d'atterrissage peut en effet être utilisé pour prévenir des individus qu'un hélicoptère est en phase d'approche, mais cette solution n'est pas toujours satisfaisante.

La présente invention a alors pour objet de proposer un procédé permettant à un aéronef de signaler précisément la zone d'atterrissage visée par cet aéronef.

Les documents CN102998885, CN104036475, DE102013009803 et WO2015/019208 sont cités à titre illustratif mais n'appartiennent pas au domaine technique de l'invention, et ne fournissent pas un enseignement visant à résoudre le problème décrit précédemment.

Les documents EP 2433869, US 2003/058653, US 2010/302072 et US 4916445 sont aussi connus.

L'invention concerne donc un procédé pour signaler sur un sol une zone d'atterrissage d'un aéronef en vol, cette zone d'atterrissage étant visée par un aéronef volant à une hauteur comprise entre une hauteur maximale et une hauteur minimale.

Selon ce procédé, l'aéronef projette sur le sol avec un projecteur une forme lumineuse dite « forme lumineuse projetée » comprenant au moins une ligne lumineuse, au moins une ligne lumineuse délimitant une surface géométrique, l'aéronef tendant à poser au moins une partie d'un atterrisseur de cet aéronef sur cette surface géométrique, la forme lumineuse projetée étant identique quelle que soit la position dudit projecteur dans l'espace aérien.

Selon ce procédé, l'aéronef émet une forme lumineuse dessinant une forme lumineuse projetée sur le sol. L'expression « forme lumineuse projetée » désigne ainsi la forme dessinée sur le sol par le projecteur de l'aéronef. Cette forme lumineuse projetée comprend au moins une ligne lumineuse, et en particulier une ligne lumineuse qui délimite une surface géométrique.

La surface géométrique est par exemple non éclairée par le projecteur projetant la forme lumineuse. Par suite, une ligne lumineuse n'est pas assimilable à un disque totalement éclairé. Une ligne lumineuse selon l'invention peut délimiter une surface géométrique, la surface géométrique étant éventuellement au moins partiellement éclairée, par exemple par un phare d'atterrissage usuel. Cette surface géométrique peut alors représenter une zone d'atterrissage.

Par ailleurs, le faisceau lumineux projeté au sol par un phare d'atterrissage classique présente des dimensions qui varient en fonction de la hauteur de l'aéronef par rapport au sol. Ce faisceau lumineux éclaire classiquement un disque de petit diamètre lorsque l'aéronef est à une hauteur faible, et un disque de grand diamètre lorsque l'aéronef est à une hauteur importante.

A l'inverse, selon l'invention la forme lumineuse projetée dessinée le sol a des dimensions fixes, à savoir des dimensions qui demeurent constantes quelle que soit la position du projecteur dans l'espace aérien. En raison de la précision des divers instruments, l'expression « la forme lumineuse projetée étant identique quelle que soit la position dudit projecteur dans l'espace aérien » signifie que les dimensions de la forme lumineuse projetée sont incluses dans une plage de dimensions restreintes de l'ordre de dix pourcent de la dimension théorique par exemple. A titre illustratif, un cercle lumineux d'un diamètre théorique de 10 mètres peut présenter un diamètre réel oscillant entre 9 mètres et 11 mètres.

Par suite, la hauteur de l'aéronef et l'inclinaison du projecteur par rapport au repère terrestre n'ont pas d'impact notable selon l'invention sur la forme dessinée au sol par l'aéronef.

La surface géométrique représente donc toujours une zone où sera posé un atterrisseur de l'aéronef, et donc la zone d'atterrissage de l'aéronef.

Dès lors, des individus présents au sol peuvent facilement identifier la zone d'atterrissage.

En outre, cette forme lumineuse projetée est réalisée à partir de lignes lumineuses et non pas d'un faisceau illuminant la totalité d'une surface ronde ou ovale. Par conséquent, la forme lumineuse est plus facile à identifier dans un environnement éclairé partiellement par des phares de véhicule.

La hauteur minimale peut être nulle. Néanmoins et pour simplifier le dispositif d'éclairage mettant en oeuvre ce procédé, la hauteur minimale peut être de l'ordre de 20 mètres, et la hauteur maximale de l'ordre de 200 mètres.

En effet, lorsque l'aéronef est très près du sol, un système optique complexe doit être utilisé pour afficher la forme requise.

De même, lorsque l'aéronef évolue à une hauteur élevée, le dispositif doit posséder des systèmes à haute résolution pour être efficace.

Ce procédé peut de plus comporter une ou plusieurs des caractéristiques qui suivent.

Dès lors, une ligne lumineuse peut décrire un cercle lumineux au sol, l'aéronef tendant à poser au moins une partie d'un atterrisseur de cet aéronef à l'intérieur de ce cercle. Au lieu d'éclairer un disque, le dispositif d'éclairage génère alors un cercle lumineux.

Un cercle présente l'avantage d'être parfaitement identifiable.

Les lignes lumineuses peuvent en outre avoir des couleurs caractéristiques qui diffèrent de la couleur jaune ou blanche des phares d'atterrissage. Par exemple, des lignes lumineuses peuvent être de couleur verte ou rouge.

Par ailleurs, au moins une ligne lumineuse peut représenter une projection au sol d'un organe de l'aéronef à l'échelle une, cette projection étant disposée au droit de l'endroit que devrait occuper ledit organe suite à l'atterrissage.

La forme lumineuse projetée sur le sol peut prendre divers aspects.

Toutefois, une forme lumineuse projetée peut avantageusement représenter un organe de l'aéronef à l'échelle une. Cette caractéristique permet d'identifier encore plus facilement l'aéronef pour des individus présents au sol. De même, cette caractéristique facilite le travail d'un pilote en représentant au moins partiellement l'empreinte de cet aéronef sur le sol à l'issue de l'atterrissage.

Par exemple, l'aéronef comportant une voilure tournante munie de pales, les pales comprenant une extrémité libre décrivant en rotation un cercle dit « cercle de sustentation », une ligne lumineuse décrit un cercle lumineux dit « cercle interne » représentant une projection sur le sol à l'échelle une dudit cercle de sustentation au sol.

Par suite, le projecteur émet une forme lumineuse dite « forme lumineuse émise » qui projette sur le sol une forme lumineuse projetée décrivant un cercle représentative de l'encombrement de la voilure tournante de l'aéronef.

Grace à ce système, quelle que soit la hauteur, le pilote peut donc visualiser la position de la voilure tournante à l'issue de l'atterrissage. Ce pilote peut notamment facilement détecter des objets dangereux pour la voilure tournante dans la zone illuminée.

De même, des individus présents au sol peuvent déterminer où se trouvera la voilure tournante de l'aéronef, et peuvent donc éviter de stationner dans une zone dangereuse pour eux.

Par ailleurs, une autre ligne lumineuse décrit éventuellement un cercle dit « cercle externe » qui entoure le cercle interne.

Le cercle externe permet de délimiter une zone de sécurité à respecter vis-à-vis de l'aéronef.

Par exemple, le cercle externe présente un diamètre au moins égal au double du diamètre du cercle interne, le cercle interne et le cercle externe étant concentriques.

En outre, une ligne lumineuse peut décrire un segment qui représente un axe d'atterrissage de l'aéronef.

Ce segment facilite alors l'approche de l'aéronef vers le sol.

En particulier, l'aéronef comprenant une cabine prolongée par une poutre de queue, une ligne lumineuse décrit un segment qui représente la poutre de queue de l'aéronef à l'échelle une.

La représentation de la poutre de queue indique visuellement l'angle horizontal d'approche de l'aéronef vers sa zone d'atterrissage.

Favorablement, le procédé selon l'invention peut établir de projeter un forme lumineuse dite « forme lumineuse projetée » dessinant au sol un cercle interne représentant un rotor de l'aéronef à l'échelle une, un cercle externe qui est concentrique au cercle interne et qui représente une zone de sécurité, et un segment représentant la poutre de queue de l'aéronef à l'échelle une.

Le segment représentant la poutre de queue peut par exemple posséder une épaisseur de trait supérieure à l'épaisseur des cercles.

Toute l'information nécessaire au pilote ou au personnel au sol est alors projetée au sol sur la zone d'atterrissage.

Par ailleurs, au moins une ligne lumineuse peut avoir une luminosité constante quelle que soit la position du projecteur dans l'espace aérien.

Outre des dimensions constantes, la forme lumineuse projetée dessinée au sol peut avoir une luminosité constante. Cette caractéristique tend par exemple à limiter les risques d'éblouissement d'un individu présent au sol.

Pour générer une forme au sol, on peut déterminer une forme lumineuse initiale comportant chaque ligne lumineuse. On corrige alors la forme lumineuse initiale en fonction de la position du projecteur dans l'espace aérien pour obtenir une forme lumineuse corrigée, puis on projette la forme lumineuse corrigée avec le projecteur pour obtenir au sol la forme lumineuse projetée ayant des dimensions invariantes quelle que soit la position du projecteur dans l'espace aérien.

La forme lumineuse émise par le projecteur est donc la forme lumineuse corrigée, cette forme lumineuse corrigée donnant naissance au sol à la forme lumineuse projetée.

Selon ce procédé, on établit une forme lumineuse initiale, puis on déforme cette forme lumineuse initiale si nécessaire pour que la forme lumineuse projetée dessinée au sol possède des dimensions qui ne varient pas.

La largeur des lignes lumineuses de la forme lumineuse initiale dessinée sur le sol peut également être ajustée pour permettre une visualisation idéale du pilote des diverses lignes au sol.

De plus, pour corriger la forme lumineuse initiale en fonction de la position du projecteur dans l'espace aérien, on peut corriger la forme lumineuse initiale en fonction d'une part d'au moins une information relative à une distance séparant le projecteur d'une zone éclairée par ce projecteur et d'autre part d'au moins une information relative à au moins un angle d'un projecteur par rapport au sol.

En particulier, on peut corriger la forme lumineuse initiale en fonction d'un angle présent entre un axe de projection du projecteur et la direction de la pesanteur, ou d'un angle présent entre un axe de projection du projecteur et le sol considéré comme horizontal.

Par exemple, la forme lumineuse initiale est corrigée en fonction d'au moins une orientation à choisir dans la liste suivante :
- une orientation de l'aéronef relativement à la surface terrestre illustrée par au moins un des angles suivants à savoir un angle de roulis, un angle de tangage et un angle de lacet de l'aéronef dans le repère terrestre,
- une orientation du projecteur relativement à la surface terrestre illustrée par au moins un des angles suivants à savoir un angle de roulis, un angle de tangage et un angle de lacet du projecteur dans le repère terrestre,
- une orientation du projecteur relativement à l'aéronef illustrée par au moins un des angles suivants à savoir un angle de roulis, un angle de tangage et un angle de lacet du projecteur dans le repère de l'aéronef.

En outre, la forme lumineuse est corrigée en fonction d'une information représentative d'une distance séparant le projecteur d'une zone éclairée par ce projecteur au travers d'au moins un paramètre de la liste suivante :
- une distance verticale selon la pesanteur entre le projecteur et le sol, cette distance verticale étant par exemple déduite de l'altitude de l'aéronef fournie par un système de positionnement connu sous l'acronyme GPS et de l'altitude du sol paramétrée manuellement ou déterminée automatiquement par un calculateur,
- une distance entre le projecteur et la forme projetée sur le sol,
- une distance horizontale entre une projection selon la pesanteur de l'aéronef sur le sol et la forme lumineuse projetée sur le sol, cette distance horizontale étant par exemple déduite par calcul à partir des coordonnées géographiques de l'aéronef fournies par le système de positionnement et des coordonnées géographiques de la forme projetée sur le sol paramétrées manuellement ou déterminées automatiquement par un calculateur.

Par ailleurs, on peut ajuster l'épaisseur d'au moins une ligne lumineuse sur requête d'un pilote de l'aéronef.

Outre un procédé, l'invention vise un dispositif d'éclairage pour signaler sur un sol une zone d'atterrissage d'un aéronef en vol.

Ce dispositif d'éclairage comporte un générateur de lumière relié à un système de traitement optique d'un projecteur, le dispositif d'éclairage comportant une unité de traitement reliée au système de traitement optique et à un système de mesure qui détermine au moins une information relative à la position dans l'espace aérien du projecteur, l'unité de traitement appliquant ledit procédé décrit précédemment pour contrôler le système de traitement optique afin de projeter sur le sol au moins une ligne lumineuse délimitant une surface géométrique, la forme lumineuse projetée étant identique quelle que soit la position dudit projecteur.

Le système de mesure peut notamment déterminer au moins une information permettant d'identifier le trajet que doit parcourir la forme lumineuse émise par le projecteur. Ce trajet peut être identifié à l'aide d'une information d'orientation du projecteur et d'une distance à parcourir.

L'unité de traitement peut par ailleurs comprendre une unité de calcul munie d'au moins un processeur ou équivalent, et une unité de stockage pourvue au moins d'une mémoire non volatile. L'unité de calcul exécute alors des informations stockées dans l'unité de stockage pour appliquer le procédé selon l'invention en fonction des données transmises par le système de mesure.

L'unité de traitement détermine alors des ordres transmis au système de traitement optique, voire au générateur de lumière. Cette unité de traitement détermine notamment la forme à projeter pour obtenir une forme lumineuse projetée au sol qui est invariante quelle que soit la position du projecteur.

Ainsi, l'unité de traitement mémorise par exemple les informations relatives au positionnement du projecteur par rapport à la zone à éclairer, puis calcule mathématiquement selon des relations mémorisées la forme à projeter en fonction de la position dans l'espace du projecteur voire du grossissement d'un dispositif de zoom du système de traitement optique.

L'unité de traitement peut aussi contrôler le générateur de lumière ou un filtre du système de traitement optique pour ajuster la puissance de la lumière émise par le projecteur ou la source lumineuse. Cette caractéristique permet de projeter une forme lumineuse qui respecte les règlements relatifs à la sécurité oculaire d'individus au sol.

Ce dispositif peut de plus comporter une ou plusieurs des caractéristiques qui suivent.

Ainsi, le générateur de lumière peut comporter au moins une source de lumière quasi-monochromatique.

Une diode laser ou une diode électroluminescente émettant un faisceau lumineux quasi-monochromatique peuvent être utilisées.

L'expression quasi-monochromatique est connue de l'homme du métier et signifie que le spectre du faisceau lumineux émis par la source de lumière comprend une unique raie émise dans une plage de fréquences de faible dimension, à savoir une plage de l'ordre de 5 nanomètres par exemple.

En particulier, la source de lumière émet un faisceau lumineux ayant un spectre comprenant une raie à une fréquence comprise entre 350 nm (nanomètres) et 900 nm pour obtenir une perception visuelle optimisée dans un environnement ambiant lumineux.

Par ailleurs, le système de traitement optique peut comporter un encodeur spatial d'image et un dispositif de zoom agencé en aval de l'encodeur spatial d'image.

Le terme « aval » est à appréhender en fonction du sens de propagation de la lumière.

Dès lors, l'encodeur spatial d'image peut comporter par exemple :
- un polariseur, un collimateur et un modulateur optique spatial dénommé « Spatial Light Modulator » en langue anglaise et connu sous les acronymes LCD ou LCOS, ou
- une matrice de micro miroirs connue sous l'acronyme DMD signifiant « Digital Micromirror Device » en langue anglaise, ou
- un balayeur X-Y de faisceau formant un doublet d'acousto-optique.

Le dispositif de zoom peut être ajustable électriquement en comprenant une lentille ajustable électriquement, ou encore un doublet de lentilles muni d'une lentille qui coulisse le long d'un axe.

Selon un autre aspect, le générateur de lumière peut comporter une pluralité de sources de lumière quasi-monochromatique.

Le dispositif peut notamment comprendre un système polychromatique basé sur plusieurs sources de lumière ainsi que deux ou plusieurs étages de modulation spatial et de recombinaison des faisceaux lumineux pour générer des lignes lumineuses de formes et/ou de couleurs différentes. Une ligne peut notamment être représentée à l'aide de traits en pointillés, et une autre ligne à l'aide d'un trait continu.

Par ailleurs, le dispositif d'éclairage peut comporter un dispositif de commande contrôlé par un pilote pour régler l'épaisseur des lignes projetées au sol, ledit dispositif de commande étant relié à l'unité de traitement.

En outre, le dispositif d'éclairage peut comporter une tourelle orientable selon au moins deux axes, le projecteur étant porté par la tourelle.

Le projecteur est ainsi mobile par rapport au fuselage de l'aéronef. Une plateforme gyrostabilisée peut être utilisée en complément de la tourelle orientable biaxe.

La tourelle peut coopérer avec un système de commande manuel piloté par un pilote, voire avec un système d'asservissement utilisant les coordonnées géographiques de la zone à éclairer pour permettre au projecteur de pointer directement une zone spécifiée par ses coordonnées géographiques.

Par ailleurs, le système de mesure peut comporter au moins un équipement à choisir dans une liste comprenant : un télémètre, un système de positionnement dans l'espace de l'aéronef, un système mesurant une orientation du projecteur par rapport à l'aéronef, un système déterminant une attitude de l'aéronef, un système mesurant une orientation du projecteur par rapport à la surface terrestre, un système manuel permettant à un individu de saisir une information de hauteur, d'altitude ou géographique.

Le système de mesure peut ainsi fournir une information relative à l'orientation du projecteur dans l'espace pour déterminer un axe de projection du projecteur selon lequel axe le projecteur émet de la lumière.

Ce système de mesure peut par exemple mesurer l'orientation dans l'espace du projecteur à l'aide d'un système mesurant une orientation du projecteur par rapport à la surface terrestre. A cet effet, une centrale inertielle ou équivalent et/ou des capteurs aptes à mesurer chacun un angle tel qu'un inclinomètre peuvent être utilisés.

Ce système de mesure peut mesurer l'orientation dans l'espace de l'aéronef et l'orientation du projecteur par rapport à l'aéronef. Par exemple, le système de mesure comporte alors un système mesurant une orientation du projecteur par rapport à l'aéronef tel qu'un système comprenant des capteurs angulaires, et un système déterminant une attitude de l'aéronef tel qu'un système comprenant une centrale inertielle ou des inclinomètres par exemple.

Le système de mesure peut aussi comprendre un télémètre qui mesure une information de distance relative à la distance que doit parcourir la lumière émise par le projecteur jusqu'au sol.

Le système de mesure peut ainsi fournir une information relative directement à cette distance.

Toutefois, le système de mesure peut déterminer indirectement cette information en déterminant une distance verticale séparant l'aéronef et le sol selon la pesanteur, et une distance horizontale entre une projection selon la pesanteur de l'aéronef sur le sol et la forme lumineuse projetée sur le sol par le projecteur.

A cet effet, le système de mesure peut comprendre un système de positionnement dans l'espace de l'aéronef et/ou un système manuel permettant à un individu de saisir une information de hauteur ou géographique.

Le système de positionnement comporte par exemple un système GPS permettant de déterminer les coordonnées dans l'espace de l'aéronef. Ces coordonnées permettent notamment d'évaluer la hauteur de l'aéronef à savoir la distance verticale séparant l'aéronef et le sol selon la pesanteur. Le sol est à considérer au sens large, ce sol pouvant être un sol solide ou liquide le cas échéant.

Un radioaltimètre peut aussi être utilisé à cette fin.

Le système manuel peut comprendre des moyens usuels permettant à un individu de paramétrer la hauteur de l'aéronef et/ou les coordonnées de la zone à éclairer, tel qu'une souris, un clavier, un écran tactile..

La distance horizontale peut alors être déduite des coordonnées de l'aéronef et des coordonnées de la zone à éclairer.

Le système de mesure peut ainsi comprendre un télémètre, un système de positionnement connu sous l'acronyme GPS, voire un organe de saisie pilotable par un individu pour saisir la valeur d'au moins un paramètre.

Par ailleurs, un système d'asservissement à un phare d'atterrissage peut être utilisé pour pointer un faisceau lumineux dans la même direction que le projecteur.

Outre un dispositif d'éclairage, l'invention vise un aéronef muni de ce dispositif d'éclairage.

L'invention et ses avantages apparaîtront avec plus de détails dans le cadre de la description qui suit avec des exemples donnés à titre illustratif en référence aux figures annexées qui représentent :
- la figure 1, une vue en trois dimensions schématique d'un aéronef selon l'invention,
- la figure 2, une vue schématique d'un dispositif d'éclairage selon l'invention,
- la figure 3, une vue illustrant le fonctionnement d'un système de mesure du dispositif d'éclairage,
- la figure 4, une vue d'une tourelle d'un dispositif de d'éclairage,
- la figure 5, une vue explicitant le procédé selon l'invention,
- les figures 6 et 7, des vues d'une forme lumineuse projetée, et
- la figure 8, un vue explicitant une variante d'un aéronef muni d'un dispositif d'éclairage selon l'invention coopérant avec un phare.

Les éléments présents dans plusieurs figures distinctes sont affectés d'une seule et même référence.

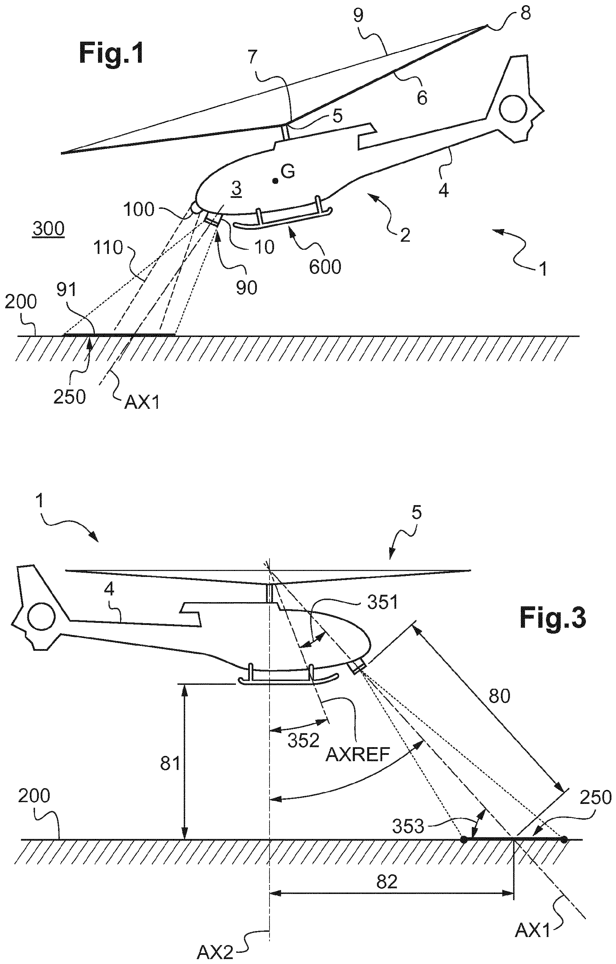

La figure 1 présente un aéronef 1 selon l'invention.

Cet aéronef 1 comporte un fuselage 2 qui s'étend longitudinalement d'un nez vers une queue. Ce fuselage délimite successivement, du nez vers la queue, une cabine 3 suivie d'une poutre de queue 4.

Par ailleurs, le fuselage s'étend en élévation à partir d'un atterrisseur 600.

L'atterrisseur 600 de la figure 1 comporte un train d'atterrissage à patins. Néanmoins, cet atterrisseur peut par exemple présenter un train d'atterrissage à skis, ou encore une pluralité de trains d'atterrissage portant chacun une ou plusieurs roues.

L'aéronef 1 comporte en outre une voilure tournante qui est munie d'au moins un rotor 5. Cette voilure tournante comporte par exemple au moins un rotor 5 porté par le fuselage 2.

Chaque rotor de la voilure tournante comprend en outre une pluralité de pales 6. Chaque pale 6 s'étend en envergure d'une emplanture 7 attachée à un moyen d'entraînement en rotation du rotor à une extrémité libre 8. L'extrémité libre des pales d'un rotor se déplace le long de la périphérie d'un cercle dit « cercle de sustentation 9 » par commodité.

Par ailleurs, l'aéronef peut comporter au moins un phare d'atterrissage 100 émettant un faisceau lumineux 110.

En outre, l'aéronef 1 comporte un dispositif d'éclairage 10 selon l'invention. Ce dispositif d'éclairage 10 émet une forme lumineuse dite « forme lumineuse émise 90 » pour projeter sur une zone d'atterrissage 250 du sol 200 survolé une forme lumineuse dite « forme lumineuse projetée 91 ». La forme lumineuse émise est aussi dénommée « forme lumineuse corrigée » par la suite.

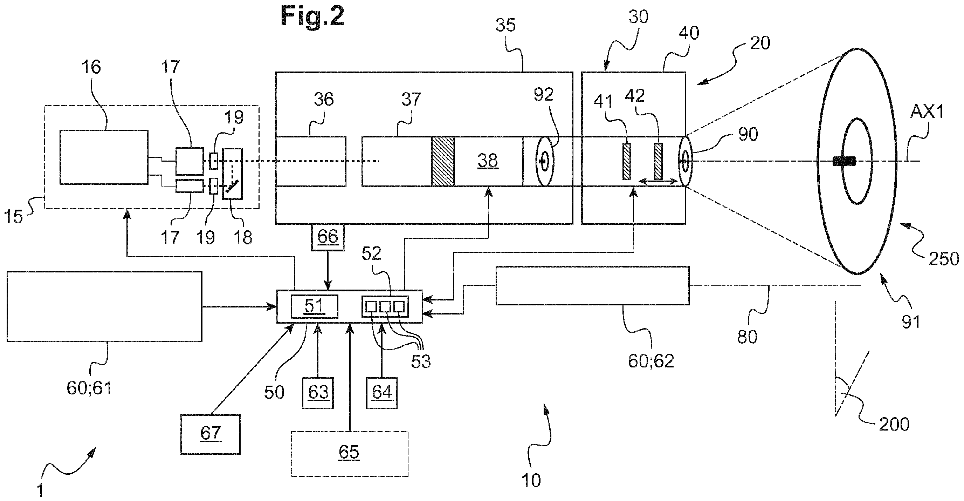

En référence à la figure 2, le dispositif d'éclairage 10 comprend un générateur de lumière 15 relié optiquement à un système de traitement optique 30 d'un projecteur 20. Le générateur de lumière 15 et le projecteur 20 sont contrôlés par une unité de traitement 50.

Le générateur de lumière peut être déporté par rapport au projecteur 20, ou faire partie de ce projecteur 20.

Le générateur de lumière 15 comporte au moins une source de lumière 17 reliée à un système d'alimentation électrique 16. Chaque source de lumière 17 peut émettre une lumière quasi-monochromatique. Par exemple, chaque source de lumière 17 comprend une diode laser, ou encore une diode électroluminescente.

En présence d'une pluralité de sources de lumière 17, le dispositif d'éclairage peut comprendre un combineur 18, par exemple dans le générateur de lumière 15.

En outre, le dispositif d'éclairage peut comprendre au moins un système de modulation 19 d'une lumière, par exemple un système de modulation par source de lumière 17.

La lumière générée par le générateur de lumière est ensuite transmise à un système de traitement optique 30 du projecteur 20 pour être mise en forme. Le projecteur transforme alors la lumière générée pour générer une forme lumineuse corrigée 90 à la sortie du projecteur 20. Cette forme lumineuse corrigée 90 donne alors naissance à une forme lumineuse projetée 91 sur le sol 200.

Le dispositif d'éclairage peut comporter un polariseur 36 agencé en amont du système de traitement optique 30 ou au sein de ce système de traitement optique 30. Le polariseur peut appartenir au projecteur ou être déporté par rapport à ce projecteur.

Par ailleurs, le système de traitement optique 30 peut comporter un encodeur spatial d'image 35 suivi d'un dispositif de zoom 40 pour générer la forme lumineuse corrigée 90.

L'encodeur spatial d'image 35 peut se situer dans l'alignement du dispositif de zoom 40 faisant office de système de projection. Toutefois, l'encodeur spatial d'image 35 peut être décalé par rapport au dispositif de zoom 40 pour des raisons d'encombrement, le projecteur comprenant alors au moins un moyen de renvoi optique pour relier optiquement l'encodeur spatial d'image 35 et le dispositif de zoom 40.

Dès lors, l'encodeur spatial d'image 35 de la figure 2 est pourvu d'un collimateur 37 et d'un modulateur optique spatial 38 permettant de générer une forme lumineuse dite « forme lumineuse intermédiaire 92 ».

De manière alternative, l'encodeur spatial d'image 35 peut éventuellement comprendre une matrice de micromiroirs, ou un balayeur X-Y de faisceau.

La forme lumineuse intermédiaire est alors transmise optiquement au dispositif de zoom. Cette transmission peut s'effectuer dans l'air par exemple, la forme lumineuse intermédiaire étant projetée vers le dispositif de zoom 40.

Ce dispositif de zoom 40 peut être un dispositif usuel. Par exemple, le dispositif de zoom 40 comporte une lentille fixe 41 et une lentille mobile 42. La sortie du dispositif de zoom génère la forme lumineuse corrigée 90 projetée par le projecteur 20.

Pour commander le générateur de lumière 15 et le système de traitement optique 30, le dispositif d'éclairage 10 est muni d'une unité de traitement 50.

L'unité de traitement 50 transmet ainsi des ordres de commande par des liaisons filaires ou non filaires au générateur de lumière 15 et au système de traitement optique 30. De tels ordres peuvent prendre la forme de signaux électriques ou informatiques.

Cette unité de traitement 50 est pourvue d'une unité de stockage 52. L'unité de stockage 52 possède par exemple une pluralité de mémoires 53, et notamment une mémoire non volatile mémorisant des instructions à exécuter et une mémoire volatile stockant des données résultant de mesures ou de paramètres saisis par un individu.

Par ailleurs, l'unité de traitement 50 est munie d'une unité de calcul 51. Cette unité de calcul peut comporter au moins un processeur ou équivalent, le processeur exécutant des instructions stockées dans l'unité de stockage 52.

En particulier, l'unité de traitement 50 transmet des ordres pour éteindre ou allumer le générateur de lumière 15 sur ordre d'un pilote. Par exemple, un pilote requiert à l'aide d'un bouton d'éteindre ou d'allumer le générateur de lumière 15. L'unité de traitement contrôle alors par exemple un interrupteur du système d'alimentation électrique 16.

De même, l'unité de traitement 50 peut transmettre des ordres au générateur de lumière 15 pour régler l'intensité lumineuse de la forme lumineuse projetée 91 pour ne pas éblouir des individus présents sur le sol 200. L'unité de traitement contrôle alors les sources de lumière 17 par exemple pour réduire ou augmenter l'intensité de la lumière générée par au moins une source de lumière.

En outre, l'unité de traitement peut transmettre des ordres à l'encodeur spatial d'image 35 et/ou au dispositif de zoom 40 pour projeter au sol la forme lumineuse projetée 91.

A cet effet, l'unité de traitement 50 est reliée à un système de mesure 60 qui détermine au moins une information relative à la position du dispositif d'éclairage 10 dans l'espace aérien, et en particulier au moins une information relative à la position du projecteur 20.

Ce système de mesure permet notamment au dispositif d'éclairage de déterminer au moins une distance relative à la distance à parcourir par la lumière entre le projecteur et le sol, et au moins un angle permettant de positionner un axe de projection suivi par la lumière par le projecteur par rapport au sol.

A l'aide de ces données, l'unité de traitement calcule la valeur de paramètres de réglage et transmet des ordres au générateur de lumière et au système de traitement optique 30 pour obtenir la forme lumineuse projetée 91 souhaitée.

A cet effet, le constructeur établit des formules mathématiques en appliquant des règles géométriques connues, voire en procédant à des essais ou à des simulations.

De manière alternative, au moins une base de données fournit les réglages adéquats en fonction des données collectées par le système de mesure 60. La base de données peut être obtenue par essais ou simulations.

Ce système de mesure 60 peut comporter un télémètre 62. Ce télémètre peut être porté par le projecteur pour directement déterminer la distance 80 séparant selon une ligne droite le projecteur 20 de la zone éclairée 250 par ce projecteur sur le sol. Une telle zone éclairée représente la zone d'atterrissage cible de l'aéronef.

Alternativement et en référence à la figure 3, un télémètre ou un radioaltimètre peuvent aussi mesurer la hauteur 81 de l'aéronef.

Dès lors, un système 67 visible sur la figure 2 peut être utilisé par un individu pour saisir les coordonnées de la zone à éclairer 250.

De plus, le système de mesure peut comporter un système 63 de positionnement dans l'espace de l'aéronef 1 visible sur la figure 2, tel qu'un système GPS ou équivalent qui permet de déterminer les coordonnées de l'aéronef dans le repère terrestre.

L'unité de traitement peut alors déduire de ces coordonnées géographiques une distance horizontale 82, voire la hauteur 81. La hauteur 81 et la distance horizontal 82 sont alors représentatives conjointement de la distance 80 séparant selon une ligne droite le projecteur 20 de la zone éclairée 250 par ce projecteur.

En référence à la figure 2, le système de mesure peut comporter un système 61 mesurant une orientation du projecteur par rapport à l'aéronef 1.

L'expression « orientation du projecteur » fait référence à l'orientation d'un axe de projection AX1 du projecteur, le projecteur émettant la lumière selon cet axe de projection AX1

En référence à la figure 3, le système 61 mesurant une orientation du projecteur par rapport à l'aéronef 1 peut mesurer au moins un angle 351 séparant ledit axe de projection AX1 d'un axe de référence AXREF de l'aéronef. Un tel système 61 mesurant une orientation du projecteur par rapport à l'aéronef 1 peut comprendre un capteur angulaire par exemple.

Par exemple, le système de 61 mesure au moins un des angles suivants : un angle de roulis du projecteur par rapport à un axe de roulis de l'aéronef, un angle de tangage du projecteur par rapport à un axe de tangage de l'aéronef, et un angle de lacet du projecteur par rapport à un axe de lacet de l'aéronef.

En référence à la figure 2, le système de mesure peut comporter un système 64 déterminant une attitude de l'aéronef, à savoir un angle de roulis, un angle de tangage et un angle de lacet de l'aéronef.

En référence à la figure 3, le système 64 déterminant une attitude de l'aéronef peut mesurer au moins un angle 352 séparant un axe de référence de l'aéronef d'un référentiel terrestre, et par exemple de la pesanteur AX2.

Par suite, le système 61 mesurant une orientation du projecteur par rapport à l'aéronef 1 et le système 64 déterminant une attitude de l'aéronef permettent conjointement à l'unité de traitement de positionner l'axe de projection AX1 dans le repère terrestre.

En référence à la figure 2, le dispositif d'éclairage peut comporter un système 66 mesurant directement une orientation 353 du projecteur 20 par rapport à la surface terrestre visible sur la figure 3.

Eventuellement et en référence à la figure 2, le système peut comporter un système manuel 67 permettant à un individu de saisir les coordonnées géographiques de la zone à éclairer.

Par ailleurs, le dispositif d'éclairage 10 peut comporter un dispositif de commande 65 contrôlé par un pilote pour régler l'épaisseur de lignes projetées au sol par le projecteur. Ce dispositif de commande 65 est relié à l'unité de traitement 50. Ce dispositif de commande peut comprendre une souris, un clavier, un écran tactile, un bouton, un système vocal ...

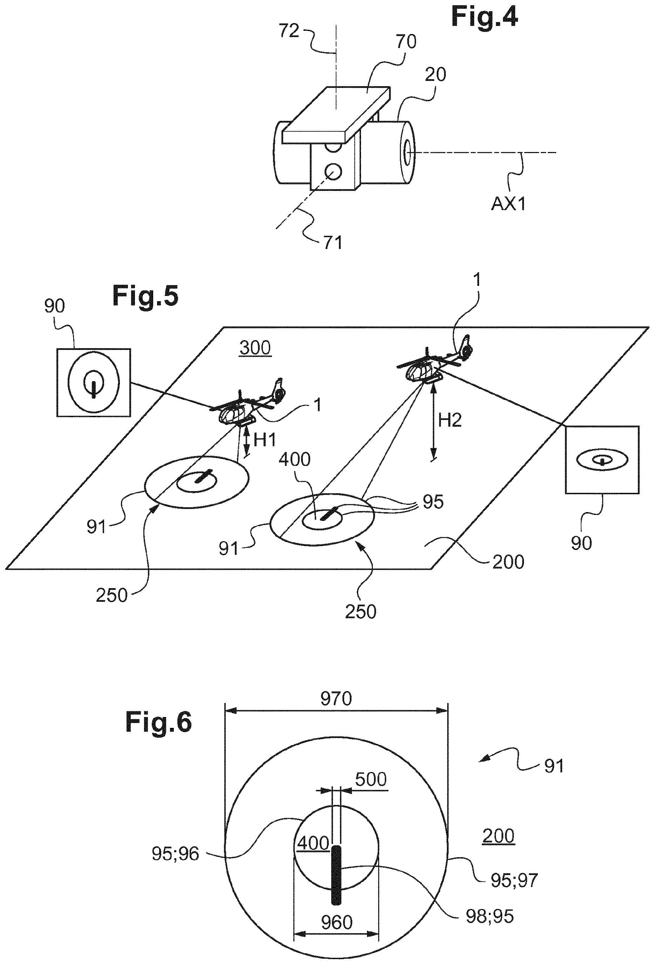

Par ailleurs et en référence à la figure 4, le dispositif d'éclairage 10 comporte une tourelle 70 pour orienter l'axe de projection AX1 du projecteur 20. La tourelle est orientable selon au moins deux axes 71, 72, à l'aide de moyens motorisés usuels. Dès lors, le projecteur 20 est porté par la tourelle 70.

Selon le procédé appliqué par le dispositif d'éclairage, et en référence à la figure 5, l'aéronef 1 projette sur le sol avec un projecteur 20 une forme lumineuse projetée 91.

La forme lumineuse projetée 91 comprend au moins une ligne lumineuse 95 qui délimite une surface géométrique 400. Cette surface géométrique 400 représente une zone d'atterrissage visée par l'aéronef, cet aéronef 1 étant manoeuvré pour poser au moins une partie de son atterrisseur sur la surface géométrique 400.

Par ailleurs, cette forme lumineuse projetée 91 reste identique quelle que soit la position du projecteur 20 dans l'espace aérien 300.

En effet, l'unité de traitement du dispositif d'éclairage contrôle ce dispositif d'éclairage pour que la forme lumineuse projetée 91 reste identique quelle que soit la position du projecteur 20 dans l'espace aérien 300.

La figure 5 illustre cet aspect en présentant l'aéronef 1 à deux hauteurs H1, H2 différentes.

En fonction de la position du projecteur, la forme lumineuse corrigée 90 émise à la sortie du projecteur varie pour que la forme lumineuse projetée 91 dessinée sur le sol conserve au contraire des dimensions constantes. Pour chaque position de l'aéronef illustrée sur la figure 5, cette figure 5 présente la forme lumineuse corrigée 90 et la forme lumineuse projetée.

Pour obtenir ce résultat, une forme lumineuse initiale comporte chaque ligne lumineuse. Cette forme lumineuse initiale est alors corrigée en fonction de la position du projecteur 20 dans l'espace aérien 300 pour obtenir la forme lumineuse corrigée 90.

En effet, le projecteur peut être réglé pour projeter une forme lumineuse initiale, à savoir une forme par défaut. L'unité de traitement peut déterminer des ordres de commande transmis au projecteur et/ou au générateur de lumière pour corriger la forme lumineuse initiale en fonction de la position du projecteur 20 dans l'espace aérien 300.

La forme lumineuse corrigée 90 est alors projetée avec le projecteur pour obtenir au sol la forme lumineuse projetée 91 requise.

La correction de la forme lumineuse initiale peut être réalisée en fonction d'une part d'au moins une information relative à une distance séparant le projecteur d'une zone éclairée par ce projecteur, et d'autre part d'au moins une information relative à au moins un angle d'un projecteur par rapport au sol.

Par ailleurs et en référence à la figure 6, au moins une ligne lumineuse 95 décrit un cercle 96, 97 lumineux. Dès lors, au moins un cercle délimite une surface 400 sur laquelle l'aéronef 1 vise à se poser.

En outre, au moins une ligne lumineuse peut représenter une projection sur le sol d'un organe de l'aéronef à l'échelle une, cette projection étant disposée au droit de l'endroit que devrait occuper cet organe suite à l'atterrissage.

Un tel organe peut être une poutre de queue ou un rotor de l'aéronef 1.

Ainsi, une ligne lumineuse 95 représente un cercle lumineux dit « cercle interne 96 » qui correspond à la projection sur le sol à l'échelle une du cercle de sustentation 9 à l'issue de l'atterrissage escompté.

Une ligne lumineuse 95 peut aussi former un segment 98 qui représente un axe d'atterrissage de l'aéronef 1. En particulier, ce segment 98 peut représenter la projection sur le sol une de la poutre de queue 4 de l'aéronef 1 à l'échelle une à l'issue de l'atterrissage escompté.

Enfin, une troisième ligne lumineuse peut former un cercle dit « cercle externe 97 » qui entoure le cercle interne 96. Le cercle interne 96 et le cercle externe 97 sont concentriques. En outre, le cercle externe 97 peut présenter un diamètre 970 au moins égal au double du diamètre 960 du cercle interne 96.

Selon le procédé appliqué, au moins une ligne lumineuse a une luminosité constante quelle que soit la position du projecteur 20 dans l'espace aérien 300.

Par ailleurs, l'épaisseur 500 d'au moins une ligne lumineuse est réglable sur requête par un pilote.

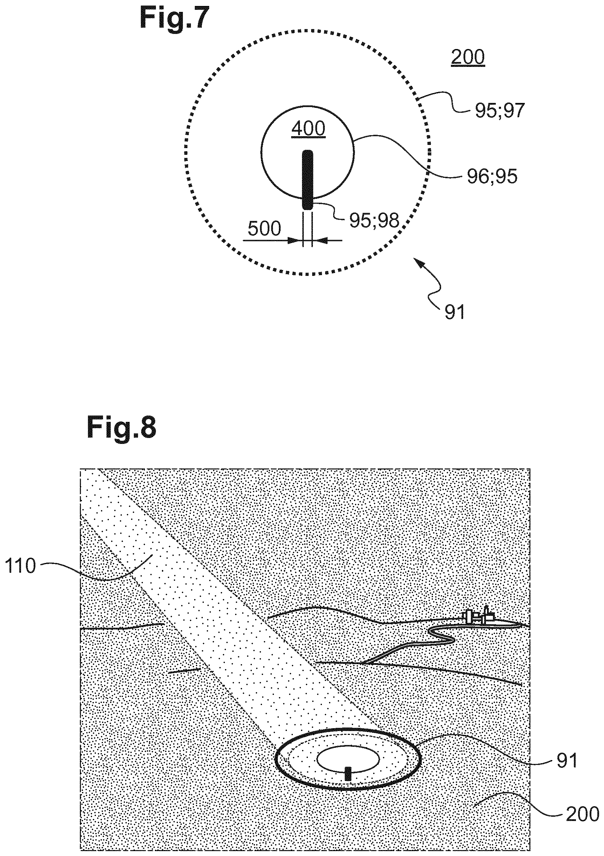

En référence à la figure 7, deux lignes lumineuses distinctes peuvent avoir des couleurs et/ ou des formes différentes.

Selon l'exemple de la figure 7, le cercle interne est matérialisé par une ligne continue de couleur verte, alors que le cercle externe est matérialisé par un trait en pointillés de couleur rouge par exemple.

Enfin et en référence à la figure 8, le dispositif d'éclairage peut être couplé avec un phare d'atterrissage, ce phare d'atterrissage projetant un faisceau lumineux 110 vers la forme lumineuse projetée 91. Un système d'asservissement à un phare d'atterrissage peut être utilisé pour pointer un faisceau lumineux avec le phare d'atterrissage dans la même direction que la forme lumineuse projetée émise par le projecteur.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour signaler sur un sol une zone d'atterrissage (250) d'un aéronef (1) en vol, cette zone d'atterrissage (250) étant visée par un aéronef (1) volant à une hauteur comprise entre une hauteur maximale et une hauteur minimale,
au cours duquel ledit aéronef (1) projette sur le sol avec un projecteur une forme lumineuse dite « forme lumineuse projetée (91) » comprenant au moins une ligne lumineuse (95) délimitant une surface géométrique (400), ledit aéronef (1) tendant à poser au moins une partie d'un atterrisseur de cet aéronef (1) sur ladite surface géométrique (400), ladite forme lumineuse projetée (91) étant identique quelle que soit la position dudit projecteur (20) dans l'espace aérien (300).

2. Procédé selon la revendication 1,
**caractérisé en ce qu'**une ligne lumineuse (95) décrit un cercle (96, 97) lumineux, ledit aéronef (1) tendant à poser au moins une partie d'un atterrisseur de cet aéronef à l'intérieur dudit cercle (96, 97) lumineux.

3. Procédé selon l'une quelconque des revendications 1 à 2,
**caractérisé en ce qu'**au moins une ligne lumineuse représente une projection au sol d'un organe dudit aéronef à l'échelle une, cette projection étant disposée au droit de l'endroit que devrait occuper ledit organe suite à l'atterrissage.

4. Procédé selon la revendication 3,
**caractérisé en ce que** ledit aéronef (1) comportant une voilure tournante (5) munie de pales (6), lesdites pales (6) comprenant une extrémité libre (8) décrivant en rotation un cercle dit « cercle de sustentation (9) », une ligne lumineuse (95) décrit un cercle lumineux dit « cercle interne (96) » représentant une projection sur le sol à l'échelle une dudit cercle de sustentation (9) au sol.

5. Procédé selon la revendication 4,
**caractérisé en ce qu'**une ligne lumineuse décrit un cercle dit « cercle externe (97) » qui entoure ledit cercle interne (96), ledit cercle interne (96) et ledit cercle externe (97) étant concentriques.

6. Procédé selon la revendication 5,
**caractérisé en ce que** ledit cercle externe (97) présente un diamètre (970) au moins égal au double du diamètre (960) du cercle interne (96).

7. Procédé selon l'une quelconque des revendications 1 à 6,
**caractérisé en ce qu'**une ligne lumineuse décrit un segment (98) qui représente un axe d'atterrissage de l'aéronef (1).

8. Procédé selon l'une quelconque des revendications 1 à 7,
**caractérisé en ce que** ledit aéronef (1) comprenant une cabine (3) prolongée par une poutre de queue (4), une ligne lumineuse décrit un segment (98) qui représente la poutre de queue (4) de l'aéronef (1) à l'échelle une.

9. Procédé selon l'une quelconque des revendications 1 à 8,
**caractérisé en ce qu'**au moins une ligne lumineuse a une luminosité constante quelle que soit la position dudit projecteur (20) dans l'espace aérien (300).

10. Procédé selon l'une quelconque des revendications 1 à 9,
**caractérisé en ce qu'**on détermine une forme lumineuse initiale comportant chaque ligne lumineuse, et on corrige ladite forme lumineuse initiale en fonction de la position du projecteur (20) dans l'espace aérien (300) pour obtenir un forme lumineuse corrigée (90), puis on projette ladite forme lumineuse corrigée (90) avec ledit projecteur (20) pour obtenir au sol ladite forme lumineuse projetée (91) ayant des dimensions invariantes quelle que soit la position du projecteur (20) dans l'espace aérien (300).

11. Procédé selon la revendication 10,
**caractérisé en ce que**, pour corriger ladite forme lumineuse initiale en fonction de la position du projecteur (20) dans l'espace aérien (300), on corrige ladite forme lumineuse initiale en fonction d'une part d'au moins une information relative à une distance (80) séparant le projecteur (20) d'une zone éclairée (250) par ce projecteur (20) et d'autre part d'au moins une information relative à au moins un angle d'un projecteur par rapport au sol.

12. Procédé selon l'une quelconque des revendications 1 à 11,
**caractérisé en ce qu'**on ajuste l'épaisseur (500) d'au moins une ligne lumineuse sur requête d'un pilote de l'aéronef (1).

13. Dispositif d'éclairage (10) pour signaler sur un sol (200) une zone d'atterrissage (250) d'un aéronef (1) en vol,
**caractérisé en ce que** ledit dispositif d'éclairage (10) comporte un générateur de lumière (15) relié à un système de traitement optique (30) d'un projecteur (20), ledit dispositif d'éclairage (10) comportant une unité de traitement (50) reliée audit système de traitement optique (30) et à un système de mesure (60) qui détermine au moins une information relative à la position dans l'espace aérien (300) dudit projecteur (20), ladite unité de traitement (50) appliquant ledit procédé selon l'une quelconque des revendications 1 à 12 pour contrôler ledit système de traitement optique (30) afin de projeter sur le sol la forme lumineuse projetée (91) comprenant au moins une ligne lumineuse délimitant une surface géométrique, ladite forme lumineuse projetée (91) étant identique quelle que soit la position dudit projecteur.

14. Dispositif d'éclairage selon la revendication 13,
**caractérisé en ce que** ledit générateur de lumière (15) comporte au moins une source de lumière (17) quasi-monochromatique.

15. Dispositif d'éclairage selon l'une quelconque des revendications 13 à 14,
**caractérisé en ce que** ledit système de traitement optique (30) comporte un encodeur spatial d'image (35) et un dispositif de zoom (40) agencé en aval de l'encodeur spatial d'image (35).

16. Dispositif d'éclairage selon l'une quelconque des revendications 13 à 15,
**caractérisé en ce que** le dispositif d'éclairage (10) comporte un dispositif de commande (65) contrôlé par un pilote pour régler une épaisseur des lignes projetées au sol, ledit dispositif de commande (65) étant relié à l'unité de traitement (50).

17. Dispositif d'éclairage selon l'une quelconque des revendications 13 à 16,
**caractérisé en ce que** le dispositif d'éclairage (10) comporte une tourelle (70) orientable selon au moins deux axes (71, 72), ledit projecteur étant porté par ladite tourelle (70).

18. Dispositif d'éclairage selon l'une quelconque des revendications 13 à 17,
**caractérisé en ce que** ledit système de mesure (60) comporte au moins un équipement à choisir dans une liste comprenant : un télémètre (62), un système (63) de positionnement dans l'espace de l'aéronef (1), un système (61) mesurant une orientation du projecteur par rapport à l'aéronef (1), un système (64) déterminant une attitude de l'aéronef, un système (66) mesurant une orientation du projecteur (20) par rapport à la surface terrestre, un système manuel (67) permettant à un individu de saisir une information de hauteur ou géographique.

19. Dispositif d'éclairage selon la revendication 13,
**caractérisé en ce que** ledit générateur de lumière (15) comporte une pluralité de sources de lumière quasi-monochromatique.

20. Aéronef (1),
**caractérisé en ce que** ledit aéronef (1) comporte un dispositif d'éclairage selon l'une quelconque de revendications 13 à 19.

## Patentansprüche

1. Verfahren zum Kennzeichnen eines Landebereichs (250) eines sich im Flug befindlichen Luftfahrzeugs (1) auf dem Boden, wobei dieser Landebereich (250) von einem Luftfahrzeug (1) anvisiert wird, das in einer Höhe zwischen einer maximalen Höhe und einer minimalen Höhe fliegt,
bei dem das Luftfahrzeug (1) mit einem Projektor eine leuchtende Form auf den Boden projiziert, die "leuchtende projizierte Form (91)" genannt wird, die mindestens eine leuchtende Linie (95) aufweist, die eine geometrische Fläche (400) eingrenzt, wobei das Luftfahrzeug (1) anstrebt, zumindest einen Teil eines Landegestells dieses Luftfahrzeugs (1) auf der geometrischen Fläche (400) aufzusetzen, wobei die projizierte leuchtende Form (91) unabhängig von der Lage des Projektors (20) im Luftraum (300) gleich groß/gleich geformt ist.

2. Verfahren nach Anspruch 1,
**dadurch gekennzeichnet, dass** eine leuchtende Linie (95) einen leuchtenden Kreis (96, 97) beschreibt, wobei das Luftfahrzeug (1) anstrebt, zumindest einen Teil eines Landegestells dieses Luftfahrzeugs im Inneren dieses Kreises (96, 97) abzusetzen.

3. Verfahren nach einem der Ansprüche 1 bis 2,
**dadurch gekennzeichnet, dass** mindestens eine leuchtende Linie eine Projektion eines Elements des Luftfahrzeugs im Maßstab 1:1 auf dem Boden darstellt, wobei diese Projektion direkt an dem Ort angeordnet ist, der von dem Element nach der Landung eingenommen wird.

4. Verfahren nach Anspruch 3,
**dadurch gekennzeichnet, dass** das Luftfahrzeug (1) einen Drehflügel (5) mit Rotorblättern (6) aufweist, wobei die Rotorblätter (6) ein freies Ende (8) aufweisen, das in Rotation einen "Auftriebskreis (9)" genannten Kreis beschreibt, wobei eine leuchtende Linie (95) einen leuchtenden Kreis beschreibt, der "innerer Kreis (96)" genannt wird, der eine Projektion im Maßstab 1:1 des Auftriebskreises (9) auf dem Boden darstellt.

5. Verfahren nach Anspruch 4,
**dadurch gekennzeichnet, dass** die leuchtende Linie einen "äußerer Kreis (97)" genannten Kreis beschreibt, der den inneren Kreis (96) umgibt, wobei der innere Kreis (96) und der äußere Kreis (97) konzentrisch sind.

6. Verfahren nach Anspruch 5,
**dadurch gekennzeichnet, dass** der äußere Kreis (97) einen Durchmesser (970) aufweist, der mindestens doppelt so groß ist wie der Durchmesser (960) des inneren Kreises (96).

7. Verfahren nach einem der Ansprüche 1 bis 6,
**dadurch gekennzeichnet, dass** die leuchtende Linie eine Strecke (98) beschreibt, die eine Landeachse des Luftfahrzeugs (1) darstellt.

8. Verfahren nach einem der Ansprüche 1 bis 7,
**dadurch gekennzeichnet, dass** das Luftfahrzeug (1) eine Kabine (3) aufweist, die durch einen Heckausleger (4) verlängert wird, wobei eine leuchtende Linie eine Strecke (98) beschreibt, die den Heckausleger (4) des Luftfahrzeugs (1) im Maßstab 1:1 darstellt.

9. Verfahren nach einem der Ansprüche 1 bis 8,
**dadurch gekennzeichnet, dass** mindestens eine leuchtende Linie eine konstante Helligkeit aufweist, unabhängig von der Lage des Projektors (20) im Luftraum (300).

10. Verfahren nach einem der Ansprüche 1 bis 9,
**dadurch gekennzeichnet, dass** eine ursprüngliche leuchtende Form bestimmt wird, die jede leuchtende Linie aufweist, und die ursprüngliche leuchtende Form in Abhängigkeit von der Lage des Projektors (20) im Luftraum (300) korrigiert wird, um eine korrigierte leuchtende Form (90) zu erhalten, und dann die korrigierte leuchtende Form (90) mit dem Projektor (20) projiziert wird, um am Boden die projizierte leuchtende Form (91) zu erhalten, die unveränderliche Dimensionen aufweist, unabhängig von der Lage des Projektors (20) im Luftraum (300).

11. Verfahren nach Anspruch 10,
**dadurch gekennzeichnet, dass** zum Korrigieren der ursprünglichen leuchtenden Form in Abhängigkeit von der Lage des Projektors (20) im Luftraum (300) die ursprüngliche leuchtende Form in Abhängigkeit von einerseits mindestens einer Information bezüglich eines Abstands (80), der den Projektor (20) von einem von dem Projektor (20) beleuchteten Bereich (250) trennt, und andererseits mindestens einer Information bezüglich mindestens eines Winkels eines Projektors relativ zum Boden korrigiert wird.

12. Verfahren nach einem der Ansprüche 1 bis 11,
**dadurch gekennzeichnet, dass** die Stärke (500) mindestens einer leuchtenden Linie auf Anforderung eines Piloten des Luftfahrzeugs (1) justiert wird.

13. Beleuchtungsvorrichtung (10) zum Kennzeichnen eines Landebereichs (250) eines sich im Flug befindlichen Luftfahrzeugs (1) auf dem Boden (200), **dadurch gekennzeichnet, dass** die Beleuchtungsvorrichtung (10) eine Lichtquelle (15) aufweist, die mit einem optischen Verarbeitungssystem eines Projektors (20) verbunden ist, wobei die Beleuchtungsvorrichtung (10) eine Verarbeitungseinheit (50) aufweist, die mit dem optischen Verarbeitungssystem (30) und mit einem Messsystem (60) verbunden ist, das mindestens eine Information bezüglich der Lage des Projektors (20) im Luftraum (300) bestimmt, wobei die Verarbeitungseinheit (50) das Verfahren nach einem der Ansprüche 1 bis 12 anwendet, um das optische Verarbeitungssystem (30) zu steuern, um die projizierte leuchtende Form (91) auf den Boden zu projizieren, die mindestens eine leuchtende Linie aufweist, die eine geometrische Fläche eingrenzt, wobei die projizierte leuchtende Form (91) unabhängig von der Lage des Projektors gleich groß/gleich geformt ist.

14. Beleuchtungsvorrichtung nach Anspruch 13,
**dadurch gekennzeichnet, dass** die Lichtquelle (15) mindestens eine quasi monochromatische Lichtquelle (17) aufweist.

15. Beleuchtungsvorrichtung nach einem der Ansprüche 13 bis 14,
**dadurch gekennzeichnet, dass** das optische Verarbeitungssystem (30) einen räumlichen Bildencoder (35) und eine Zoomvorrichtung (40), die hinter dem räumlichen Bildencoder (35) angeordnet ist, aufweist.

16. Beleuchtungsvorrichtung nach einem der Ansprüche 13 bis 15,
**dadurch gekennzeichnet, dass** die Beleuchtungsvorrichtung (10) eine Steuerungsvorrichtung (65) aufweist, die von einem Piloten gesteuert wird, um eine Stärke der auf den Boden projizierten Linien zu regeln, wobei die Steuerungsvorrichtung (65) mit einer Verarbeitungseinheit (50) verbunden ist.

17. Beleuchtungsvorrichtung nach einem der Ansprüche 13 bis 16,
**dadurch gekennzeichnet, dass** die Beleuchtungsvorrichtung (10) einen Turmaufbau (70) aufweist, der entlang zweier Achsen (71, 72) ausrichtbar ist, wobei der Projektor von diesem Turmaufbau (70) getragen wird.

18. Beleuchtungsvorrichtung nach einem der Ansprüche 13 bis 17,
**dadurch gekennzeichnet, dass** das Messsystem (60) mindestens eine Ausrüstung aufweist, die aus einer Liste zu wählen ist, die umfasst: ein Telemeter (62), ein System (63) zur Positionierung des Luftfahrzeugs (1) im Raum, ein System (61), welches eine Ausrichtung des Projektors relativ zum Luftfahrzeug (1) misst, ein System (64), welches die Flughöhe des Luftfahrzeugs bestimmt, ein System (66), welches eine Ausrichtung des Projektors (20) relativ zu einer Bodenfläche misst, ein manuelles System (67), welches es einer Person ermöglicht, eine Höheninformation oder eine geographische Information zu erfassen.

19. Beleuchtungsvorrichtung nach Anspruch 13,
**dadurch gekennzeichnet, dass** die Lichtquelle (15) eine Mehrzahl von quasi monochromatischen Lichtquellen aufweist.

20. Luftfahrzeug (1),
**dadurch gekennzeichnet, dass** das Luftfahrzeug (1) eine Beleuchtungsvorrichtung nach einem der Ansprüche 13 bis 19 aufweist.

## Claims

1. A method for marking on the ground a landing zone (250) of an aircraft (1) in flight, this landing zone (250) being targeted by an aircraft (1) that is flying at a height between a maximum height and a minimum height,
during which said aircraft (1) projects onto the ground, by means of a projector, a light shape that is called a "projected light shape (91)" comprising at least one line (95) of light that delimits a geometric surface (400), said aircraft (1) aiming to place at least part of a landing gear of this aircraft (1) on said geometric surface (400), said projected light shape (91) being identical whatever the position of said projector (20) in the air space (300).

2. A method according to Claim 1,
**characterised in that** a line (95) of light describes a circle (96, 97) of light, said aircraft (1) aiming to place at least part of a landing gear of this aircraft inside said circle (96, 97) of light.

3. A method according to any one of Claims 1 to 2,
**characterised in that** at least one line of light represents a true-to-size projection onto the ground of a member of said aircraft, this projection being at the very location which said device is to occupy after landing.

4. A method according to Claim 3,
**characterised in that**, said aircraft (1) comprising a rotary wing (5) equipped with blades (6), and said blades (6) comprising a free end (8) which, as it rotates, describes a circle that is called a "circle of lift (9)", a line (95) of light describes a circle of light that is called an "inner circle (96)" representing a true-to-size projection onto the ground of said circle of lift (9) on the ground.

5. A method according to Claim 4,
**characterised in that** a line of light describes a circle that is called an "outer circle (97)", which surrounds said inner circle (96), said inner circle (96) and said outer circle (97) being concentric.

6. A method according to Claim 5,
**characterised in that** said outer circle (97) has a diameter (970) at least equal to twice the diameter (960) of the inner circle (96).

7. A method according to any one of Claims 1 to 6,
**characterised in that** a line of light describes a segment (98) which represents a landing axis of the aircraft (1).

8. A method according to any one of Claims 1 to 7,
**characterised in that**, said aircraft (1) comprising a cabin (3) that is extended by a tail boom (4), a line of light describes a segment (98) which represents, true to size, the tail boom (4) of the aircraft (1).

9. A method according to any one of Claims 1 to 8,
**characterised in that** at least one line of light has a constant brightness whatever the position of said projector (20) in the air space (300).

10. A method according to any one of Claims 1 to 9,
**characterised in that** an initial light shape comprising each line of light is determined, and said initial light shape is corrected as a function of the position of the projector (20) in the air space (300) in order to obtain a corrected light shape (90), then said corrected light shape (90) is projected using said projector (20) in order to obtain on the ground said projected light shape (91) of unvarying dimensions whatever the position of the projector (20) in the air space (300).

11. A method according to Claim 10,
**characterised in that**, in order to correct said initial light shape as a function of the position of the projector (20) in the air space (300), said initial light shape is corrected as a function on the one hand of at least one item of information relating to a distance (80) separating the projector (20) from a zone (250) illuminated by this projector (20), and on the other hand of at least one item of information relating to at least one angle of a projector in relation to the ground.

12. A method according to any one of Claims 1 to 11,
**characterised in that** the thickness (500) of at least one line of light is adjusted at the request of a pilot of the aircraft (1).

13. An illumination device (10) for marking on the ground a landing zone (250) of an aircraft (1) in flight,
**characterised in that** said illumination device (10) comprises a light generator (15) connected to an optical processing system (30) of a projector (20), said illumination device (10) comprising a processing unit (50) that is connected to said optical processing system (30) and to a measuring system (60) that determines at least one item of information relating to the position of said projector (20) in the air space (300), said processing unit (50) applying said method according to any one of Claims 1 to 12 in order to control said optical processing system (30) such that the projected light shape (91), which comprises at least one line of light that delimits a geometric surface, is projected onto the ground, said projected light shape (91) being identical whatever the position of said projector.

14. An illumination device according to Claim 13,
**characterised in that** said light generator (15) comprises at least one source of quasi-monochromatic light (17).

15. An illumination device according to any one of Claims 13 to 14,
**characterised in that** said optical processing system (30) comprises a spatial image encoder (35) and a zoom device (40) arranged downstream of the spatial image encoder (35).

16. An illumination device according to any one of Claims 13 to 15, **characterised in that** the illumination device (10) comprises a control device (65) controlled by a pilot in order to adjust a thickness of the lines projected onto the ground, said control device (65) being connected to the processing unit (50).

17. An illumination device according to any one of Claims 13 to 16,
**characterised in that** the illumination device (10) comprises a turret (70) that can be oriented along at least two axes (71, 72), said projector being supported by said turret (70).

18. An illumination device according to any one of Claims 13 to 17,
**characterised in that** said measuring system (60) comprises at least one item of equipment to be selected from a list comprising: a range finder (62), a system (63) for positioning the aircraft (1) in space, a system (61) that measures an orientation of the projector in relation to the aircraft (1), a system (64) determining an attitude of the aircraft, a system (66) measuring an orientation of the projector (20) in relation to the earth's surface, a manual system (67) allowing an individual to capture an item of height or geographical information.

19. An illumination device according to Claim 13,
**characterised in that** said light generator (15) comprises a plurality of sources of quasi-monochromatic light.

20. An aircraft (1),
**characterised in that** said aircraft (1) comprises an illumination device according to any one of Claims 13 to 19.
